(19) **Europäisches Patentamt**
**European Patent Office**
**Office européen des brevets**

(11) **EP 4 142 289 A1**

(12) **EUROPEAN PATENT APPLICATION**

(43) Date of publication:
**01.03.2023 Bulletin 2023/09**

(21) Application number: **22186667.6**

(22) Date of filing: **25.07.2022**

(51) International Patent Classification (IPC):
*H04N 19/46* (2014.01)          *G06N 3/04* (2006.01)
*G06N 3/08* (2006.01)          *H04N 19/70* (2014.01)

(52) Cooperative Patent Classification (CPC):
**H04N 19/46; G06N 3/045; G06N 3/08; H04N 19/70**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 FI 20215910**

(71) Applicant: **Nokia Technologies Oy**
**02610 Espoo (FI)**

(72) Inventors:
• **REZAZADEGAN TAVAKOLI, Hamed**
**Espoo (FI)**
• **CRICRÌ, Francesco**
**Tampere (FI)**
• **ZHANG, Honglei**
**Tampere (FI)**
• **LE, Nam Hai**
**Tampere (FI)**
• **HANNUKSELA, Miska Matias**
**Tampere (FI)**
• **GHAZNAVI YOUVALARI, Ramin**
**Tampere (FI)**
• **AKSU, Emre Baris**
**Tampere (FI)**

(74) Representative: **Nokia EPO representatives**
**Nokia Technologies Oy**
**Karakaari 7**
**02610 Espoo (FI)**

(54) **A METHOD, AN APPARATUS AND A COMPUTER PROGRAM PRODUCT FOR VIDEO ENCODING AND VIDEO DECODING**

(57) The embodiments relate to a method comprising receiving media data as an input; controlling a neural network based encoder or a neural network based decoder by using a supervisory signal in order to adapt the operation of the neural network based encoder or the neural network based decoder; generating an encoded representation of the media data on the neural network based encoder, the encoded representation of the media data comprising one or more features relating to the media data; and recovering the media data from the encoded representation on the neural network based decoder and performing one or more tasks on the recovered media data.

Fig. 9

EP 4 142 289 A1

## Description

The project leading to this application has received funding from the ECSEL Joint Undertaking (JU) under grant agreement No 876019. The JU receives support from the European Union's Horizon 2020 research and innovation programme and Germany, Netherlands, Austria, Romania, France, Sweden, Cyprus, Greece, Lithuania, Portugal, Italy, Finland, Turkey.

Technical Field

The present solution generally relates to neural network based video coding.

Background

One of the elements in image and video compression is to compress data while maintaining the quality to satisfy human perceptual ability. However, in recent development of machine learning, machines can replace humans when analyzing data for example in order to detect events and/or objects in video/image. Thus, when decoded image data is consumed by machines, the quality of the compression can be different from the human approved quality. Therefore a concept Video Coding for Machines (VCM) has been provided.

Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for receiving media data as an input; means for controlling a neural network based encoder or a neural network based decoder by using a supervisory signal in order to adapt the operation of the neural network based encoder or the neural network based decoder; means for generating an encoded representation of the media data on the neural network based encoder, the encoded representation of the media data comprising one or more features relating to the media data; and means for recovering the media data from the encoded representation on the neural network based decoder and performing one or more tasks on the recovered media data.

According to a second aspect, there is provided a method comprising receiving media data as an input; controlling a neural network based encoder or a neural network based decoder by using a supervisory signal in order to adapt the operation of the neural network based encoder or the neural network based decoder; generating an encoded representation of the media data on the neural network based encoder, the encoded representation of the media data comprising one or more features relating to the media data; and recovering the media data from the encoded representation on the neural network based decoder and performing one or more tasks on the recovered media data.

According to a third aspect, there is provided an apparatus comprising at least one processor, memory including computer program code, the memory and the computer program code configured to, with the at least one processor, cause the apparatus to perform at least the following: receive media data as an input; control a neural network based encoder or a neural network based decoder by using a supervisory signal in order to adapt the operation of the neural network based encoder or the neural network based decoder; generate an encoded representation of the media data on the neural network based encoder, the encoded representation of the media data comprising one or more features relating to the media data; and recover the media data from the encoded representation on the neural network based decoder and perform one or more tasks on the recovered media data.

According to a fourth aspect, there is provided a computer program product comprising computer program code configured to, when executed on at least one processor, cause an apparatus or a system to: receive media data as an input; control a neural network based encoder or a neural network based decoder by using a supervisory signal in order to adapt the operation of the neural network based encoder or the neural network based decoder; generate an encoded representation of the media data on the neural network based encoder, the encoded representation of the media data comprising one or more features relating to the media data; and recover the media data from the encoded representation on the neural network based decoder and perform one or more tasks on the recovered media data.

According to an embodiment, the means for controlling is configured to signal the supervisory signal from the neural network based decoder to one or more layers of the neural network based encoder.

According to an embodiment, the means for controlling is configured to provide the supervisory signal to one or more layers of the neural network based decoder.

According to an embodiment, the means for controlling is configured to signal the supervisory signal from the neural network based encoder to the network based decoder.

According to an embodiment, the supervisory signal is a vector, a matrix or a tensor.

According to an embodiment, the supervisory signal is indicated in one of the following: a supplemental enhancement information message; a configuration interface; a session description; a back-channel message; a query parameter.

According to an embodiment, the supervisory signal comprises one or more of the following syntax elements: identification of a task a machine uses; identification of the quantization being applied; step size of the quantization algorithm.

According to an embodiment, the neural network based encoder or the neural network based decoder is trained by means of a control function establishing a connection between the supervisory signal and an original neural network.

According to an embodiment, the control function is binarized or quantized.

According to an embodiment, the computer program product is embodied on a non-transitory computer readable medium.

## Description of the Drawings

In the following, various embodiments will be described in more detail with reference to the appended drawings, in which

Fig. 1     shows an example of a codec with neural network (NN) components;

Fig. 2     shows another example of a video coding system with neural network components;

Fig. 3     shows an example of a neural auto-encoder architecture;

Fig. 4     shows an example of a neural network-based end-to-end learned video coding system;

Fig. 5     shows an example of a video coding for machines;

Fig. 6     shows an example of a pipeline for end-to-end learned approach;

Fig. 7     shows an example of training an end-to-end learned system;

Fig. 8     shows an example of a usage of a hint signal;

Fig. 9     shows another example of a usage of a hint signal;

Fig. 10    shows an example of an implementation of the solution for VCM;

Fig. 11    shows an example of the network architecture;

Fig. 12    is a flowchart illustrating a method according to an embodiment; and

Fig. 13    shows an apparatus according to an embodiment.

## Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment in included in at least one embodiment of the disclosure.

A neural network (NN) is a computation graph consisting of several layers of computation. Each layer consists of one or more units, where each unit performs an elementary computation. A unit is connected to one or more other units, and the connection may have associated with a weight. The weight may be used for scaling the signal passing through the associated connection. Weights are learnable parameters, i.e., values which can be learned from training data. There may be other learnable parameters, such as those of batch-normalization layers.

Two of the most widely used architectures for neural networks are feed-forward and recurrent architectures. Feed-forward neural networks are such that there is no feedback loop: each layer takes input from one or more of the layers before and provides its output as the input for one or more of the subsequent layers. Also, units inside a certain layer take input from units in one or more of preceding layers, and provide output to one or more of following layers.

Initial layers (those close to the input data) extract semantically low-level features such as edges and textures in images, and intermediate and final layers extract more high-level features. After the feature extraction layers there may be one or more layers performing a certain task, such as classification, semantic segmentation, object detection, denoising, style transfer, super-resolution, etc. In recurrent neural nets, there is a feedback loop, so that the network becomes stateful, i.e., it is able to memorize information or a state.

Neural networks are being utilized in an ever-increasing number of applications for many different types of device, such as mobile phones. Examples include image and video analysis and processing, social media data analysis, device usage data analysis, etc.

One of the important properties of neural nets (and other machine learning tools) is that they are able to learn properties from input data, either in supervised way or in unsupervised way. Such learning is a result of a training algorithm, or of a meta-level neural network providing the training signal.

In general, the training algorithm consists of changing some properties of the neural network so that its output is as close as possible to a desired output. For example, in the case of classification of objects in images, the output of the neural network can be used to derive a class or category index which indicates the class or category that the object in the input image belongs to. Training usually happens by minimizing or decreasing the output's error, also referred to as the loss. Examples of losses are mean squared error, cross-entropy, etc. In recent deep learning techniques, training is an iterative process, where at each iteration the algorithm modifies the weights of the neural net to make a gradual improvement of the network's output, i.e., to gradually decrease the loss.

In this description, terms "model", "neural network", "neural net" and "network" are used interchangeably, and also the weights of neural networks are sometimes referred to as learnable parameters or simply as parameters.

Training a neural network is an optimization process, but the final goal is different from the typical goal of optimization. In optimization, the only goal is to minimize a function. In machine learning, the goal of the optimization or training process is to make the model learn the properties of the data distribution from a limited training dataset. In other words, the goal is to learn to use a limited training dataset in order to learn to generalize to previously unseen data, i.e., data which was not used for training the model. This is usually referred to as generalization. In practice, data may be split into at least two sets, the training set and the validation set. The training set is used for training the network, i.e., to modify its learnable parameters in order to minimize the loss. The validation set is used for checking the performance of the network on data which was not used to minimize the loss, as an indication of the final performance of the model. In particular, the errors on the training set and on the validation set are monitored during the training process to understand the following things:

- If the network is learning at all - in this case, the training set error should decrease, otherwise the model is in the regime of underfitting.
- If the network is learning to generalize - in this case, also the validation set error needs to decrease and to be not too much higher than the training set error. If the training set error is low, but the validation set error is much higher than the training set error, or it does not decrease, or it even increases, the model is in the regime of overfitting. This means that the model has just memorized the training set's properties and performs well only on that set, but performs poorly on a set not used for tuning its parameters.

Lately, neural networks have been used for compressing and de-compressing data such as images, i.e., in an image codec. The most widely used architecture for realizing one component of an image codec is the auto-encoder, which is a neural network consisting of two parts: a neural encoder and a neural decoder. The neural encoder takes as input an image and produces a code which requires less bits than the input image. This code may be obtained by applying a binarization or quantization process to the output of the encoder. The neural decoder takes in this code and reconstructs the image which was input to the neural encoder.

Such neural encoder and neural decoder may be trained to minimize a combination of bitrate and distortion, where the distortion may be based on one or more of the following metrics: Mean Squared Error (MSE), Peak Signal-to-Noise Ratio (PSNR), Structural Similarity Index Measure (SSIM), or similar. These distortion metrics are meant to be correlated to the human visual perception quality, so that minimizing or maximizing one or more of these distortion metrics results into improving the visual quality of the decoded image as perceived by humans.

Video codec comprises an encoder that transforms the input video into a compressed representation suited for storage/transmission and a decoder that can decompress the compressed video representation back into a viewable form. An encoder may discard some information in the original video sequence in order to represent the video in a more compact form (that is, at lower bitrate).

Hybrid video codecs, for example ITU-T H.263 and H.264, may encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This may be done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate).

Inter prediction, which may also be referred to as temporal prediction, motion compensation, or motion-compensated prediction, exploits temporal redundancy. In inter prediction the sources of prediction are previously decoded pictures.

Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain).

After applying prediction and prediction error decoding means, the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

In video codecs, the motion information may be indicated with motion vectors associated with each motion compensated image block. Each of these motion vectors represents the displacement of the image block in the picture to be coded (in the encoder side) or decoded (in the decoder side) and the prediction source block in one of the previously coded or decoded pictures. In order to represent motion vectors efficiently, those may be coded differentially with respect to block specific predicted motion vectors. In video codecs, the predicted motion vectors may be created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signaling the chosen candidate as the motion vector predictor. In addition to predicting the motion vector values, the reference index of previously coded/decoded picture can be predicted. The reference index is typically predicted from adjacent blocks and/or or co-located blocks in temporal reference picture. Moreover, high efficiency video codecs can employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information may be carried out using the motion field information of adjacent blocks and/or co-located blocks in temporal reference pictures and the used motion field information is signaled among a list of motion field candidate list filled with motion field information of available adjacent/co-located blocks.

In video codecs the prediction residual after motion compensation may be first transformed with a transform kernel (like DCT) and then coded. The reason for this is that often there still exists some correlation among the residual and transform can in many cases help reduce this correlation and provide more efficient coding.

Video encoders may utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Video coding specifications may enable the use of supplemental enhancement information (SEI) messages or alike. Some video coding specifications include SEI NAL units, and some video coding specifications contain both prefix SEI NAL units and suffix SEI NAL units, where the former type can start a picture unit or alike and the latter type can end a picture unit or alike. An SEI NAL unit contains one or more SEI messages, which are not required for the decoding of output pictures but may assist in related processes, such as picture output timing, post-processing of decoded pictures, rendering, error detection, error concealment, and resource reservation. Several SEI messages are specified in H.264/AVC, H.265/HEVC, H.266/VVC, and H.274/VSEI standards, and the user data SEI messages enable organizations and companies to specify SEI messages for their own use. The standards may contain the syntax and semantics for the specified SEI messages but a process for handling the messages in the recipient might not be defined. Consequently, encoders may be required to follow the standard specifying a SEI message when they create SEI message(s), and decoders might not be required to process SEI messages for output order conformance. One of the reasons to include the syntax and semantics of SEI messages in standards is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

Image and video codecs may use a set of filters to enhance the visual quality of the predicted visual content and can be applied either in-loop or out-of-loop, or both. In the case of in-loop filters, the filter applied on one block in the currently-encoded frame will affect the encoding of another block in the same frame and/or in another frame which is predicted from the current frame. An in-loop filter can affect the bitrate and/or the visual quality. In fact, an enhanced block will cause a smaller residual (difference between original block and predicted-and-filtered block), thus requiring less bits to be encoded. An out-of-the loop filter will be applied on a frame after it has been reconstructed, the filtered visual content won't be as a source for prediction, and thus it may only impact the visual quality of the frames that are output by the decoder.

Recently, neural networks (NNs) have been used in the context of image and video compression, by following mainly two approaches.

In one approach, NNs are used to replace one or more of the components of a traditional codec such as WC/H.266. Here, term "traditional" refers to those codecs whose components and their parameters may not be learned from data. Examples of such components are:

- Additional in-loop filter, for example by having the NN as an additional in-loop filter with respect to the traditional loop filters.
- Single in-loop filter, for example by having the NN replacing all traditional in-loop filters.
- Intra-frame prediction.
- Inter-frame prediction.
- Transform and/or inverse transform.
- Probability model for the arithmetic codec.
- Etc.

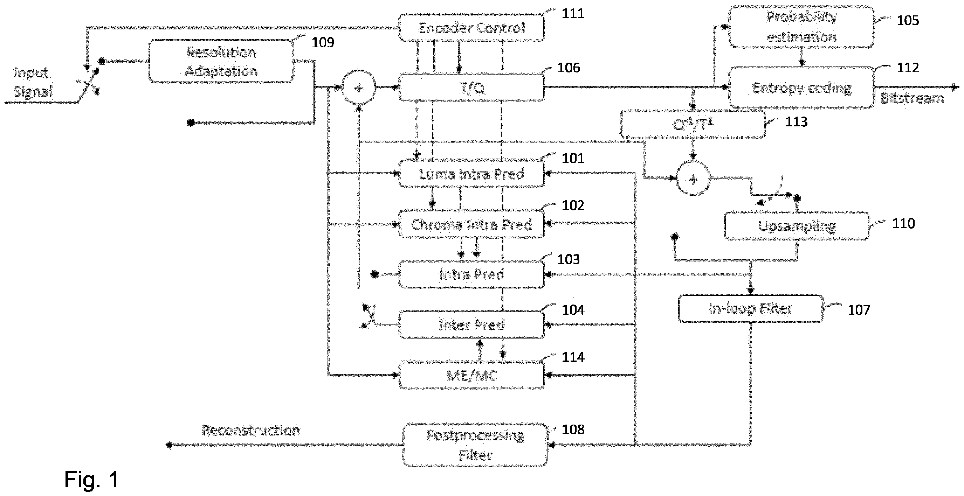

Figure 1 illustrates examples of functioning of NNs as components of a traditional codec's pipeline, in accordance with an embodiment. In particular, Figure 1 illustrates an encoder, which also includes a decoding loop. Figure 1 is shown to include components described below:

- A luma intra pred block or circuit 101. This block or circuit performs intra prediction in the luma domain, for example, by using already reconstructed data from the same frame. The operation of the luma intra pred block or circuit 101 may be performed by a deep neural network such as a convolutional auto-encoder.

- A chroma intra pred block or circuit 102. This block or circuit performs intra prediction in the chroma domain, for example, by using already reconstructed data from the same frame. The chroma intra pred block or circuit 102 may perform cross-component prediction, for example, predicting chroma from luma. The operation of the chroma intra pred block or circuit 102 may be performed by a deep neural network such as a convolutional auto-encoder.

- An intra pred block or circuit 103 and inter-pred block or circuit 104. These blocks or circuit perform intra prediction and inter-prediction, respectively. The intra pred block or circuit 103 and the inter-pred block or circuit 104 may perform the prediction on all components, for example, luma and chroma. The operations of the intra pred block or circuit 103 and inter-pred block or circuit 104 may be performed by two or more deep neural networks such as convolutional auto-encoders.

- A probability estimation block or circuit 105 for entropy coding. This block or circuit performs prediction of probability for the next symbol to encode or decode, which is then provided to the entropy coding module 112, such as the arithmetic coding module, to encode or decode the next symbol. The operation of the probability estimation block or circuit 105 may be performed by a neural network.

- A transform and quantization (T/Q) block or circuit 106. These are actually two blocks or circuits. The transform and quantization block or circuit 106 may perform a transform of input data to a different domain, for example, the FFT transform would transform the data to frequency domain. The transform and quantization block or circuit 106 may quantize its input values to a smaller set of possible values. In the decoding loop, there may be inverse quantization block or circuit and inverse transform block or circuit 113. One or both of the transform block or circuit and quantization block or circuit may be replaced by one or two or more neural networks. One or both of the inverse transform block or circuit and inverse quantization block or circuit 113 may be replaced by one or two or more neural networks.

- An in-loop filter block or circuit 107. Operations of the in-loop filter block or circuit 107 is performed in the decoding loop, and it performs filtering on the output of the inverse transform block or circuit, or anyway on the reconstructed data, in order to enhance the reconstructed data with respect to one or more predetermined quality metrics. This filter may affect both the quality of the decoded data and the bitrate of the bitstream output by the encoder. The operation of the in-loop filter block or circuit 107 may be performed by a neural network, such as a convolutional auto-encoder. In examples, the operation of the in-loop filter may be performed by multiple steps or filters, where the one or more steps may be performed by neural networks.

- A postprocessing filter block or circuit 108. The postprocessing filter block or circuit 108 may be performed only at decoder side, as it may not affect the encoding process. The postprocessing filter block or circuit 108 filters the reconstructed data output by the in-loop filter block or circuit 107, in order to enhance the reconstructed data. The postprocessing filter block or circuit 108 may be replaced by a neural network, such as a convolutional auto-encoder.

- A resolution adaptation block or circuit 109: this block or circuit may downsample the input video frames, prior to encoding. Then, in the decoding loop, the reconstructed data may be upsampled, by the upsampling block or circuit 110, to the original resolution. The operation of the resolution adaptation block or circuit 109 block or circuit may be performed by a neural network such as a convolutional auto-encoder.

- An encoder control block or circuit 111. This block or circuit performs optimization of encoder's parameters, such as what transform to use, what quantization parameters (QP) to use, what intra-prediction mode (out of N intra-prediction modes) to use, and the like. The operation of the encoder control block or circuit 111 may be performed by a neural network, such as a classifier convolutional network, or such as a regression convolutional network.

- An ME/MC block or circuit 114 performs motion estimation and/or motion compensation, which are two key operations to be performed when performing inter-frame prediction. ME/MC stands for motion estimation / motion compensation.

In another approach, commonly referred to as "end-to-end learned compression", NNs are used as the main components of the image/video codecs. In this second approach, there are two main options:

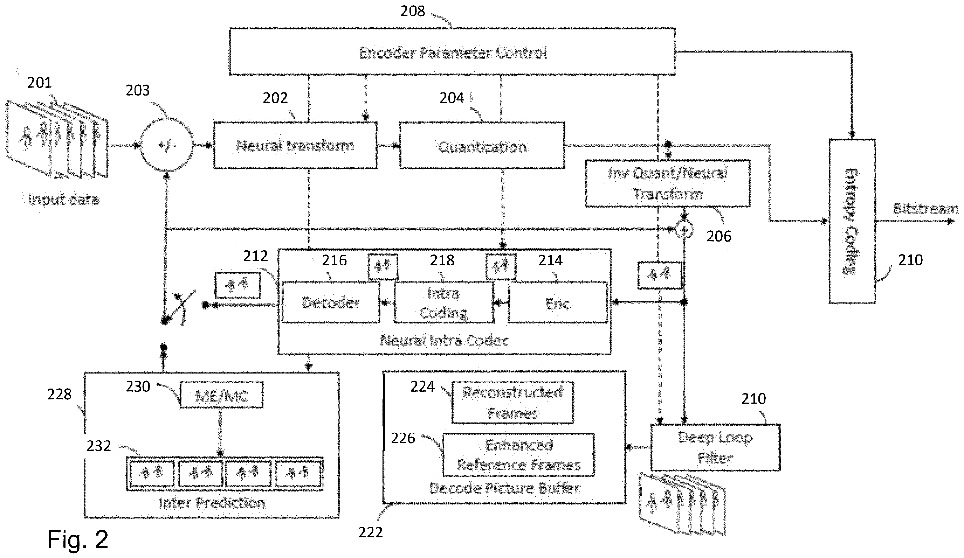

Option 1: re-use the video coding pipeline but replace most or all the components with NNs. Referring to Figure 2, it illustrates an example of modified video coding pipeline based on a neural network, in accordance with an embodiment. An example of neural network may include, but is not limited to, a compressed representation of a neural network. Figure 2 is shown to include following components:

- A neural transform block or circuit 202: this block or circuit transforms the output of a summation/subtraction operation 203 to a new representation of that data, which may have lower entropy and thus be more compressible.
- A quantization block or circuit 204: this block or circuit quantizes an input data 201 to a smaller set of possible values.
- An inverse transform and inverse quantization blocks or circuits 206. These blocks or circuits perform the inverse or approximately inverse operation of the transform and the quantization, respectively.
- An encoder parameter control block or circuit 208. This block or circuit may control and optimize some or all the parameters of the encoding process, such as parameters of one or more of the encoding blocks or circuits.

- An entropy coding block or circuit 210. This block or circuit may perform lossless coding, for example based on entropy. One popular entropy coding technique is arithmetic coding.
- A neural intra-codec block or circuit 212. This block or circuit may be an image compression and decompression block or circuit, which may be used to encode and decode an intra frame. An encoder 214 may be an encoder block or circuit, such as the neural encoder part of an auto-encoder neural network. A decoder 216 may be a decoder block or circuit, such as the neural decoder part of an auto-encoder neural network. An intra-coding block or circuit 218 may be a block or circuit performing some intermediate steps between encoder and decoder, such as quantization, entropy encoding, entropy decoding, and/or inverse quantization.
- A deep loop filter block or circuit 220. This block or circuit performs filtering of reconstructed data, in order to enhance it.
- A decode picture buffer block or circuit 222. This block or circuit is a memory buffer, keeping the decoded frame, for example, reconstructed frames 224 and enhanced reference frames 226 to be used for inter prediction.
- An inter-prediction block or circuit 228. This block or circuit performs inter-frame prediction, for example, predicts from frames, for example, frames 232, which are temporally nearby. An ME/MC 230 performs motion estimation and/or motion compensation, which are two key operations to be performed when performing inter-frame prediction. ME/MC stands for motion estimation / motion compensation.

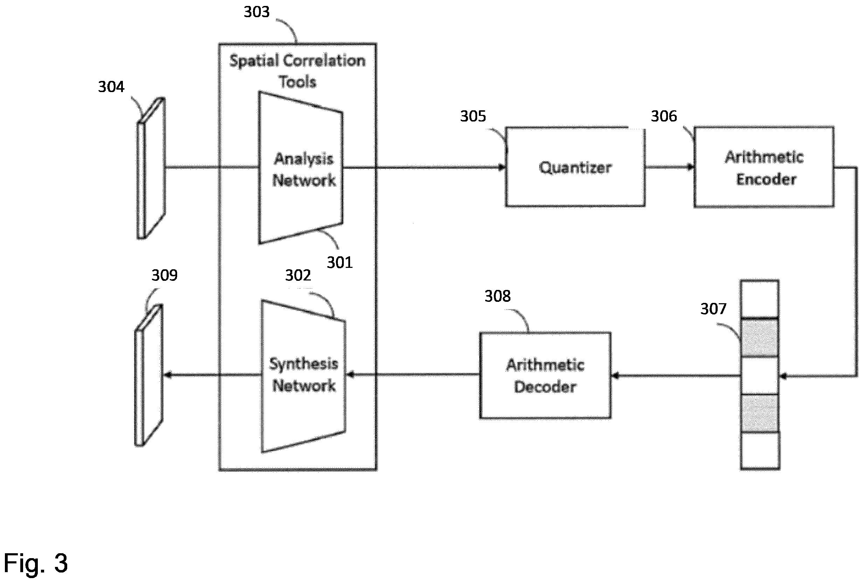

Option 2: re-design the whole pipeline, as follows. An example of option 2 is described in detail in Figure 3:

- Encoder NN: performs a non-linear transform
- Quantization and lossless encoding of the encoder NN's output.
- Lossless decoding and dequantization.
- Decoder NN: performs a non-linear inverse transform.

Figure 3 depicts an encoder and a decoder NNs being parts of a neural auto-encoder architecture, in accordance with an example. In Figure 3, the Analysis Network 301 is an Encoder NN, and the Synthesis Network 302 is the Decoder NN, which may together be referred to as spatial correlation tools 303, or as neural auto-encoder.

In Option 2, the input data 304 is analyzed by the Encoder NN, Analysis Network 301, which outputs a new representation of that input data. The new representation may be more compressible. This new representation may then be quantized, by a quantizer 305, to a discrete number of values. The quantized data may be then lossless encoded, for example, by an arithmetic encoder 306, thus obtaining a bitstream 307. The example shown in Figure 3 includes an arithmetic decoder 308 and an arithmetic encoder 306. The arithmetic encoder 306, or the arithmetic decoder 308, or the combination of the arithmetic encoder 306 and arithmetic decoder 308 may be referred to as arithmetic codec in some embodiments. On the decoding side, the bitstream is first lossless decoded, for example, by using the arithmetic codec decoder 308. The lossless decoded data is dequantized and then input to the Decoder NN, Synthesis Network 302. The output is the reconstructed or decoded data 309.

In case of lossy compression, the lossy steps may comprise the Encoder NN and/or the quantization.

In order to train this system, a training objective function (also called "training loss") may be utilized, which may comprise one or more terms, or loss terms, or simply losses. In one example, the training loss comprises a reconstruction loss term and a rate loss term. The reconstruction loss encourages the system to decode data that is similar to the input data, according to some similarity metric. Examples of reconstruction losses are:

- Mean squared error (MSE).
- Multi-scale structural similarity (MS-SSIM)
- Losses derived from the use of a pretrained neural network. For example, error(f1, f2), where f1 and f2 are the features extracted by a pretrained neural network for the input data and the decoded data, respectively, and error() is an error or distance function, such as L1 norm or L2 norm.
- Losses derived from the use of a neural network that is trained simultaneously with the end-to-end learned codec. For example, adversarial loss can be used, which is the loss provided by a discriminator neural network that is trained adversarially with respect to the codec, following the settings proposed in the context of Generative Adversarial Networks (GANs) and their variants.

The rate loss encourages the system to compress the output of the encoding stage, such as the output of the arithmetic encoder. By "compressing", we mean reducing the number of bits output by the encoding stage.

When an entropy-based lossless encoder is used, such as an arithmetic encoder, the rate loss typically encourages the output of the Encoder NN to have low entropy. Example of rate losses are the following:

- A differentiable estimate of the entropy.
- A sparsification loss, i.e., a loss that encourages the output of the Encoder NN or the output of the quantization to have many zeros. Examples are L0 norm, L1 norm, L1 norm divided by L2 norm.
- A cross-entropy loss applied to the output of a probability model, where the probability model may be a NN used to estimate the probability of the next symbol to be encoded by an arithmetic encoder.

One or more of reconstruction losses may be used, and one or more of the rate losses may be used, as a weighted sum. The different loss terms may be weighted using different weights, and these weights determine how the final system performs in terms of rate-distortion loss. For example, if more weight is given to the reconstruction losses with respect to the rate losses, the system may learn to compress less but to reconstruct with higher accuracy (as measured by a metric that correlates with the reconstruction losses). These weights may be considered to be hyper-parameters of the training session, and may be set manually by the person designing the training session, or automatically for example by grid search or by using additional neural networks.

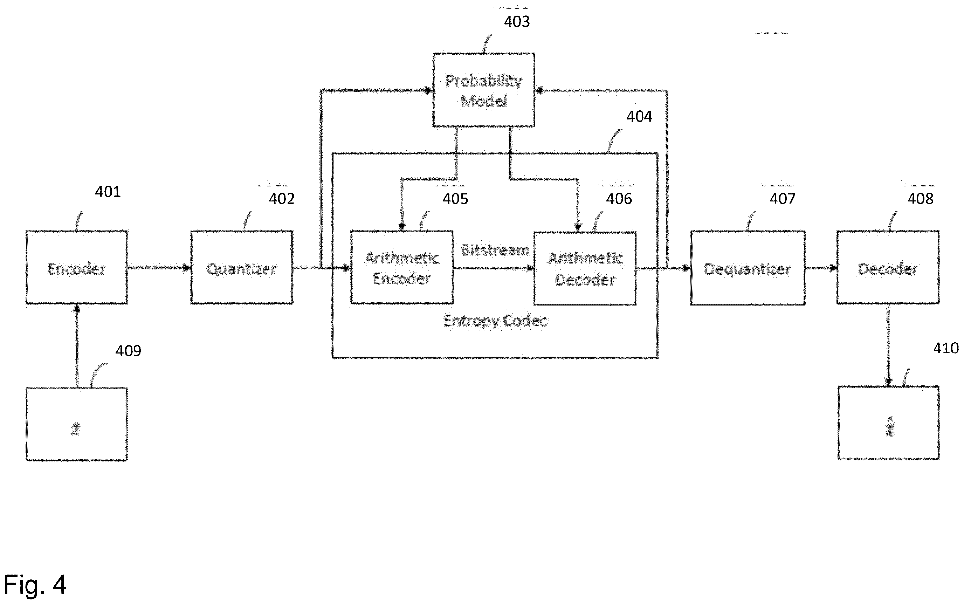

As shown in Figure 4, a neural network-based end-to-end learned video coding system may contain an encoder 410, a quantizer 420, a probability model 470, an entropy codec (for example arithmetic encoder/decoder) 430, 440, a dequantizer 450, and a decoder 460. The encoder 410 and decoder 460 may be two neural networks, or mainly comprise neural network components. The probability model 470 may also comprise mainly neural network components. Quantizer 420, dequantizer 450 and entropy codec 430, 440 may not be based on neural network components, but they may also comprise neural network components, potentially.

On encoder side, the encoder component 410 takes a video x as input and converts the video from its original signal space into a latent representation that may comprise a more compressible representation of the input. In the case of an input image, the latent representation may be a 3-dimensional tensor, where two dimensions represent the vertical and horizontal spatial dimensions, and the third dimension represent the "channels" which contain information at that specific location. If the input image is a 128x128x3 RGB image (with horizontal size of 128 pixels, vertical size of 128 pixels, and 3 channels for the Red, Green, Blue color components), and if the encoder downsamples the input tensor by 2 and expands the channel dimension to 32 channels, then the latent representation is a tensor of dimensions (or "shape") 64x64x32 (i.e., with horizontal size of 64 elements, vertical size of 64 elements, and 32 channels). Please note that the order of the different dimensions may differ depending on the convention which is used; in some cases, for the input image, the channel dimension may be the first dimension, so for the above example, the shape of the input tensor may be represented as 3x128x128, instead of 128x128x3. In the case of an input video (instead of just an input image), another dimension in the input tensor may be used to represent temporal information. The quantizer component 420 quantizes the latent representation into discrete values given a predefined set of quantization levels. Probability model 470 and arithmetic codec component 430, 440 work together to perform lossless compression for the quantized latent representation and generate bitstreams to be sent to the decoder side. Given a symbol to be encoded into the bitstream, the probability model 470 estimates the probability distribution of all possible values for that symbol based on a context that is constructed from available information at the current encoding/decoding state, such as the data that has already been encoded/decoded. Then, the arithmetic encoder 430 encodes the input symbols to bitstream using the estimated probability distributions.

On the decoder side, opposite operations are performed. The arithmetic decoder 440 and the probability model 470 first decode symbols from the bitstream to recover the quantized latent representation. Then the dequantizer 450 reconstructs the latent representation in continuous values and pass it to decoder 460 to recover the input video/image. Note that the probability model 470in this system is shared between the encoding and decoding systems. In practice, this means that a copy of the probability model 470 is used at encoder side, and another exact copy is used at decoder side.

In this system, the encoder 410, probability model 470, and decoder 460 may be based on deep neural networks. The system may be trained in an end-to-end manner by minimizing the following rate-distortion loss function:

$$ L = D + \lambda R, $$

where $D$ is the distortion loss term, $R$ is the rate loss term, and $\lambda$ is the weight that controls the balance between the two losses. The distortion loss term may be the mean square error (MSE), structure similarity (SSIM) or other metrics that evaluate the quality of the reconstructed video. Multiple distortion losses may be used and integrated into $D$, such as a weighted sum of MSE and SSIM. The rate loss term is normally the estimated entropy of the quantized latent representation, which indicates the number of bits necessary to represent the encoded symbols, for example, bits-per-pixel (bpp).

For lossless video/image compression, the system may contain only the probability model 470 and arithmetic encoder/decoder 430, 440. The system loss function contains only the rate loss, since the distortion loss is always zero (i.e., no loss of information).

Reducing the distortion in image and video compression is often intended to increase human perceptual quality, as humans are considered to be the end users, i.e. consuming/watching the decoded image. Recently, with the advent of machine learning, especially deep learning, there is a rising number of machines (i.e., autonomous agents) that analyze data independently from humans and that may even take decisions based on the analysis results without human intervention. Examples of such analysis are object detection, scene classification, semantic segmentation, video event detection, anomaly detection, pedestrian tracking, etc. Example use cases and applications are self-driving cars, video surveillance cameras and public safety, smart sensor networks, smart TV and smart advertisement, person re-identification, smart traffic monitoring, drones, etc. When the decoded data is consumed by machines, a different quality metric shall be used instead of human perceptual quality. Also, dedicated algorithms for compressing and decompressing data for machine consumption are likely to be different than those for compressing and decompressing data for human consumption. The set of tools and concepts for compressing and decompressing data for machine consumption is referred to here as Video Coding for Machines.

It is likely that the receiver-side device has multiple "machines" or task neural networks (Task-NNs). These multiple machines may be used in a certain combination which is for example determined by an orchestrator sub-system. The multiple machines may be used for example in succession, based on the output of the previously used machine, and/or in parallel. For example, a video which was compressed and then decompressed may be analyzed by one machine (NN) for detecting pedestrians, by another machine (another NN) for detecting cars, and by another machine (another NN) for estimating the depth of all the pixels in the frames.

In this description, task machine and machine and task neural network are referred to interchangeably, and for such referral any process or algorithm (learned or not from data) which analyzes or processes data for a certain task is meant. In the rest of the description, other assumptions made regarding the machines considered in this disclosure may be specified in further details.

Also, it is to be noticed that terms "receiver-side" or "decoder-side" are used to refer to the physical or abstract entity or device which may contain one or more machines, and runs these one or more machines on encoded and eventually decoded video representation which may be encoded by another physical or abstract entity or device, the "encoder-side device".

The encoded video data may be stored into a memory device, for example as a file. The stored file may later be provided to another device. Alternatively, the encoded video data may be streamed from one device to another.

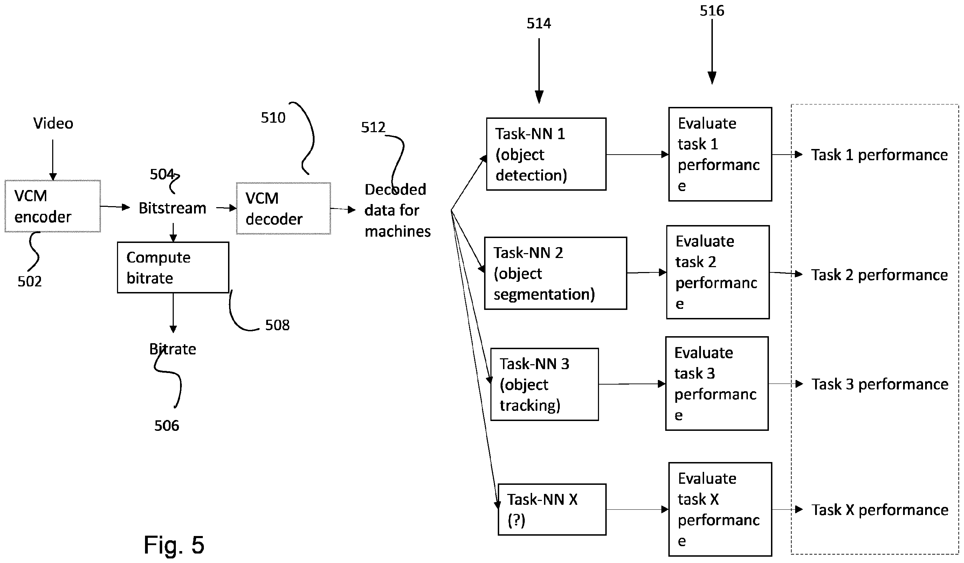

Figure 5 is a general illustration of the pipeline of Video Coding for Machines. A VCM encoder 502 encodes the input video into a bitstream 504. A bitrate 506 may be computed 508 from the bitstream 504 in order to evaluate the size of the bitstream. A VCM decoder 510 decodes the bitstream output by the VCM encoder 502. In Figure 5, the output of the VCM decoder 510 is referred to as "Decoded data for machines" 512. This data may be considered as the decoded or reconstructed video. However, in some implementations of this pipeline, this data may not have same or similar characteristics as the original video which was input to the VCM encoder 502. For example, this data may not be easily understandable by a human by simply rendering the data onto a screen. The output of VCM decoder is then input to one or more task neural networks 514. In the figure, for the sake of illustrating that there may be any number of task-NNs 514, there are three example task-NNs, and a non-specified one (Task-NN X). The goal of VCM is to obtain a low bitrate while guaranteeing that the task-NNs still perform well in terms of the evaluation metric 516 associated to each task.

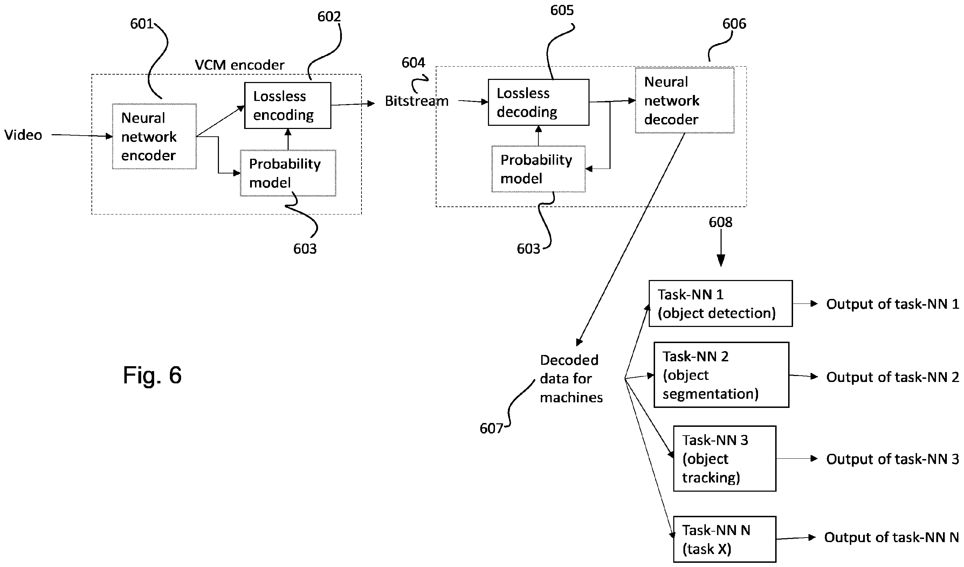

One of the possible approaches to realize video coding for machines is an end-to-end learned approach. In this approach, the VCM encoder and VCM decoder mainly consist of neural networks. Figure 6 illustrates an example of a pipeline for the end-to-end learned approach. The video is input to a neural network encoder 601. The output of the neural network encoder 601 is input to a lossless encoder 602, such as an arithmetic encoder, which outputs a bitstream 604. The lossless codec may be a probability model 603, both in the lossless encoder and in the lossless decoder, which predicts the probability of the next symbol to be encoded and decoded. The probability model 603 may also be learned, for example it may be a neural network. At decoder-side, the bitstream 604 is input to a lossless decoder 605, such as an arithmetic decoder, whose output is input to a neural network decoder 606. The output of the neural network decoder 606 is the decoded data for machines 607, that may be input to one or more task-NNs 608.

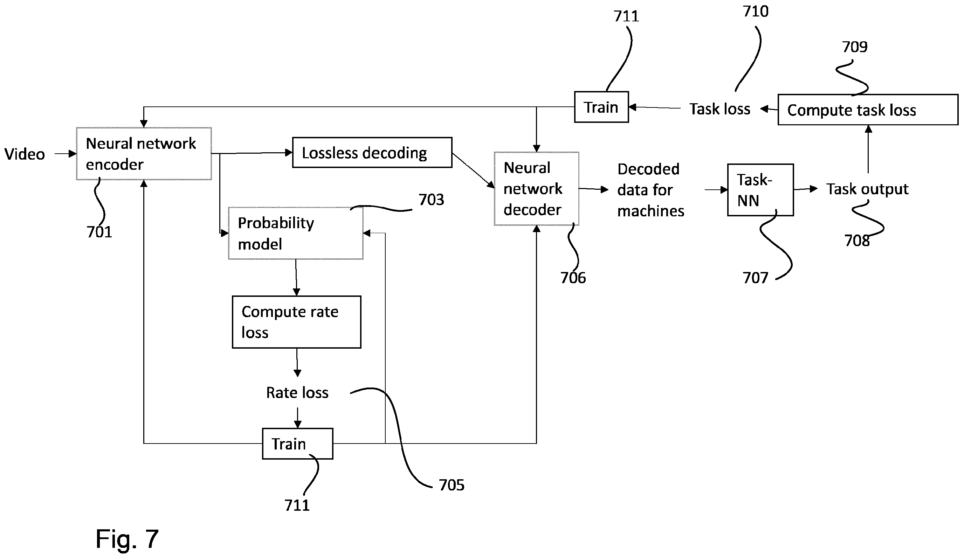

Figure 7 illustrates an example of how the end-to-end learned system may be trained. For the sake of simplicity, only one task-NN 707 is illustrated. A rate loss 705 may be computed from the output of the probability model 703. The rate loss 705 provides an approximation of the bitrate required to encode the input video data. A task loss 710 may be computed 709 from the output 708 of the task-NN 707.

The rate loss 705 and the task loss 710 may then be used to train 711 the neural networks used in the system, such as the neural network encoder 701, the probability model 703, the neural network decoder 706. Training may be performed by first computing gradients of each loss with respect to the neural networks that are contributing or affecting the computation of that loss. The gradients are then used by an optimization method, such as Adam, for updating the trainable parameters of the neural networks.

The machine tasks may be performed at decoder side (instead of at encoder side) for multiple reasons, for example because the encoder-side device does not have the capabilities (computational, power, memory) for running the neural networks that perform these tasks, or because some aspects or the performance of the task neural networks may have changed or improved by the time that the decoder-side device needs the tasks results (e.g., different or additional semantic classes, better neural network architecture). Also, there could be a customization need, where different clients would run different neural networks for performing these machine learning tasks.

With the rise of machine learning (ML) based algorithms, a controllable neural network-based system is an important capability for many applications, for example, neural video coding, video coding for machines, and compressing neural networks. One or more controllable units to tune the output of an encoder and/or decoder, and control the encoding and/or decoding mechanism for a specific configuration could help improving the efficiency of the systems.

Video coding for machines concerns encoding a input media or neural network features obtained from a common feature extraction backbone and delivering it to task machine that performs a task. Different machines may consist of one or multiple tasks where the tasks on one machine may be different from the tasks on another machine. The media or the commonly encoded features may also be used for human consumption, e.g., in human consumption schemes, where the original image/video is reconstructed from the extracted features.

One challenge with respect to feature compression is how to selectively choose the feature that benefit a specific task or signalling a task-dependent compressed feature space during encoding process. From decoder perspective, adapting a compressed generic feature space to a specific task to prevent performance loss is another challenge.

For a neural network -based video coding system, capability of adapting feature spaces or signalling mechanisms may be useful for allowing content specific encoding and/or decoding.

Another important application for a controllable neural network -based system is neural network representation compression (NNR). It aims at compressing neural networks and transferring them. A learnable solution for compression of neural networks and their weight updates conditioned on a specific task can benefit from a mechanism for adaptation or a controlling signal.

Controlling or signalling a neural network is not straightforward nor trivial. In neural network-based compression systems, such as VCM, one important aspect is the compression of features for tasks. In this regard one major problem is that current problems rely on a common feature compression. One challenge with respect to feature compression is how to selectively choose the features that benefit a specific task and obtain a compressed feature space that does not reduce the task performance significantly. It is also challenging to adapt a compressed generic feature space to a specific task to prevent performance loss.

The present embodiments provide a mechanism to control an NN-based encoder for various tasks with several use cases, for example VCM. The present embodiments comprises the following aspects:

- a signalling mechanism from task machine that allows selection of proper features and provide the formulation and implementation aspects for such encoder-side control mechanism;

- the proposed mechanisms can be used at the decoder in order to adapt a generic set of features for a specific task;
- controlling or signalling a neural network at the encoder side is not easy nor trivial. One shall design the network from the first step to be controllable. Thus, it is a challenge how an existing neural network architecture can be signalled. The present embodiments are independent of the encoder architecture and allows adapting any existing neural architecture for VCM feature extraction;
- the propose solution can apply to other neural network -based solutions for neural video coding (NVC) and NNR;
- a method and the technique according to embodiments enable signalling a neural network easily and effectively. The proposed embodiments enable transforming of any existing neural network into a controllable architecture that receives a supervisory signal to adjust its mode of operation.

## System Design

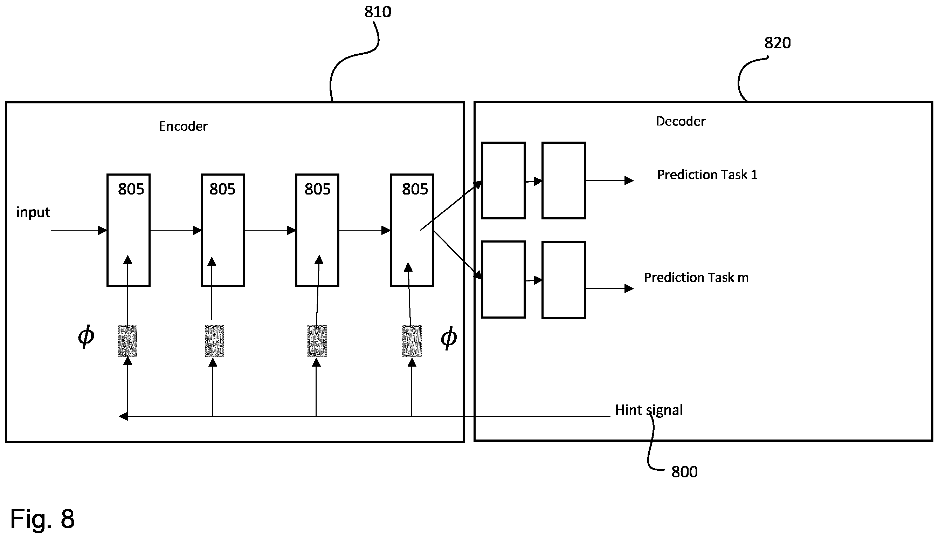

a) According to an embodiment, the encoder can be controlled using a hint signal. Figure 8 illustrates an example of providing the hint signal to the encoder side 810 for feature selection. In this example, a hint signal 800 is communicated between an encoder 810 and the decoder 820. Alternatively, the hint signal 800 may be provided as configuration information to the encoder 810. Thus, the encoder 810 is configured to perform a selective feature reduction suitable for a specific task of interest.

A neural network-based VCM system for a single task or multiple tasks may have a generic encoder-decoder architecture that comprises neural network layers 805 on its encoder side 810. The hint signal 800 can be provided to one or multiple layer 805 of the encoder 810. According to some other embodiments, the hint signal can be available at the final layer.

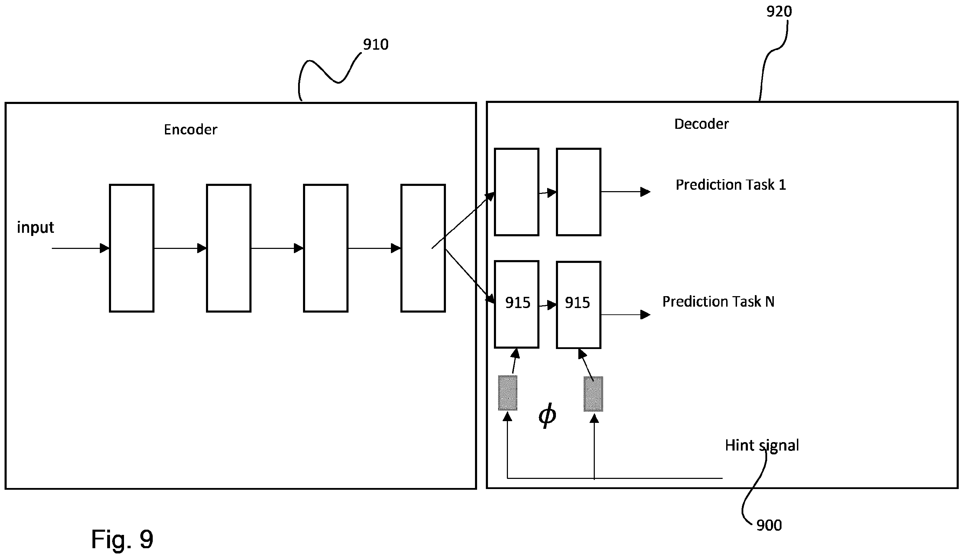

b) According to another embodiment, a hint signal may be used to adapt generic features to a specific task at decoder. Figure 9 illustrates an example of the generic architecture for this embodiment. In such case, a hint signal 900 is only available in the decoder side 920. Given a neural network architecture with a generic feature encoder 910 and several task networks at the decoder side 920, the hint signal 900 can be provided to the decoder 920 for all task networks, in one or multiple layers 915. Alternatively, the system may contain a common adaptation layer in the decoder 920 where the hint signal 900 is provided only to that layer.

c) According to another embodiment, there are hint signal options from the encoder side to the decoder side. In such case, the encoder side has a few options which NN(s) to run. These options are characterized in hint signals made available to the decoder side. Based on the hint signals, the decoder side selects which option best suits the task networks on the decoder side.

d) According to yet another embodiment, the hint signal can apply to both encoder and decoder. That is a combination of embodiments a) and b).

Hint signal, which may also be referred to as "supervisory signal" can be a one-hot vector that signals a requirement. For example, when applied to VCM, the hint signal can be a one-hot vector of m elements to signal 1 of the m tasks that the system is interested in. The hint signal can also be a binary or floating-point value vector, matrix or tensor. In some applications, e.g., NNR, the hint signal can be fine grained and derived from ground-truth such that reflecting the actual input and intend of the network along the task. For example, in classification, the known class category can be used as hint signal to identify the features that are contributing to the specific class category. The reason for such choice is that the importance or amount of contribution of each neuron to a specific configuration is measured once, and a subnetwork can be found inside the bigger network to achieve a specific task. According to another embodiment, one can also learn the hint signal using an NN or an algorithm of similar kind.

## Learning to signal a neural network using a hint signal

A neural network $N$ receives an input with $m$ task heads and a hint signal $s \in R^n$, where $n$ is the dimension of the hint signal. For each layer of the neural architecture to which the signal is applied, a control function $f$ is used to influence its operations. This function establishes the relationship between the hint signal and the original neural network.

For a given layer $L_i$, let the output be $x_i$. The control function $f$ is defined such that $f_i(x_i, s) = \hat{x}_i$, where $\hat{x}_i$ is the adapted output of layer $L_i$ after signal s is applied. An example of $f_i$ can be $f_i = W_i x_i + x_i$ where $W_i$ is the mapping of hint signal s. Another example of $f_i$ can be $f_i = W_i x_i$. $W_i = \Phi_i(s, \theta)$, where $\Phi_i$ can be a function determined from prior knowledge or a function defined by an auxiliary neural network with parameters $\theta$. Example of the auxiliary neural network that implements function $\Phi$ can be spatially independent network like a linear regressor or linear layer. A spatially independent network is one that does not rely on neighbourhoods of a signal, for example linear layers, convolutions of kernel size 1x1 and such. According to an additional embodiment, the auxiliary neural network takes in also $x_i$ as an additional input, together with the hint signal. This auxiliary neural network can be trained by optimizing the loss function computed on the output of the main network $N$, with respect to parameters $\theta$.

**Binarization of control function**

To save the storage space, the control function $f$ can be binarized. For example, for Wi, one may apply a function $\zeta$ that transforms $\phi$ and $W_i$ to a binary mapping function, example of such a function can be a threshold function. Once the binarization of auxiliary network is performed, the modified network $N$ can be fine-tuned for one or multiple tasks together with the hint signal. According to yet another embodiment, other quantization precision other than binarization (i.e., quantization using more than two discrete values) may be considered too.

**Neural network compression for VCM application**

The algorithm for employing the proposed method for simultaneous NN compression and VCM application can comprise the following steps:

- Start with a neural network that has one or more heads. For example, the neural network can be a multi-task VCM system. The multiple heads correspond to the multiple task neural networks present at decoder-side. A criterion for deployment is, e.g., memory, non-zero ratio, number of parameters, etc.
- Step (1): a data free pruning scheme is optionally applied, where

  - less important neurons are identified;
  - such neurons are removed; and
  - if necessary, fine-tune to recover the lost performance.

- Step (2): proposed scheme is applied and the unnecessary part of the network is identified for each task
- Step (3): shared neurons that are contributing to all tasks are found, where

    (a) Training for all $m$ tasks at once, the obtained $f$ functions indicate the common contributing neurons.
    (b) Training for each task progressively, the neurons are identified for each task individually, the intersection of neurons is chosen.

- Step (4): given a device criterion, e.g. memory, part or all of the shared neurons are transferred to the device. Step 4 is optional if steps 2 and 3 combined do not achieve the required compression:

- The selection of cut point is conducted if steps (2) and (3) do not achieve the required compression. In this case, the selection of cut point is done using a function g(net, criteria), where net is the output of step(3) and criteria is given at the beginning. An example implementation of G is a heuristic as below:
- G(net, criteria):

    (a) For i in number of layers in net:

    - Sub_net = net[1:i]
    - If sub_net exceeds criteria

      - Break

    (b) Return net[1:i-1]

- Step(5): coding

  - For image based content, for each extracted feature vector:

    (a) Apply quantization, e.g., uniform quantization with a step size or a code-book based quantization
    (b) Employ a coding scheme such as Huffman, DeepCABAC, or arithmetic coding on the features
    (c) Transfer the step size or codebook to the decoder side, transfer the features

  - For sequential or temporal data, apply predictive coding on the feature vectors, that is encode one feature vector as base like above, use that as a basis to encode other feature vectors. The base feature vector could be reset after n feature transfer or when performance drops by a signal from decoder side.

- Step(6): Optional fine-tuning of the tasks, encoder and decoder based on the encoded/decoded features

**Example implementation for VCM**

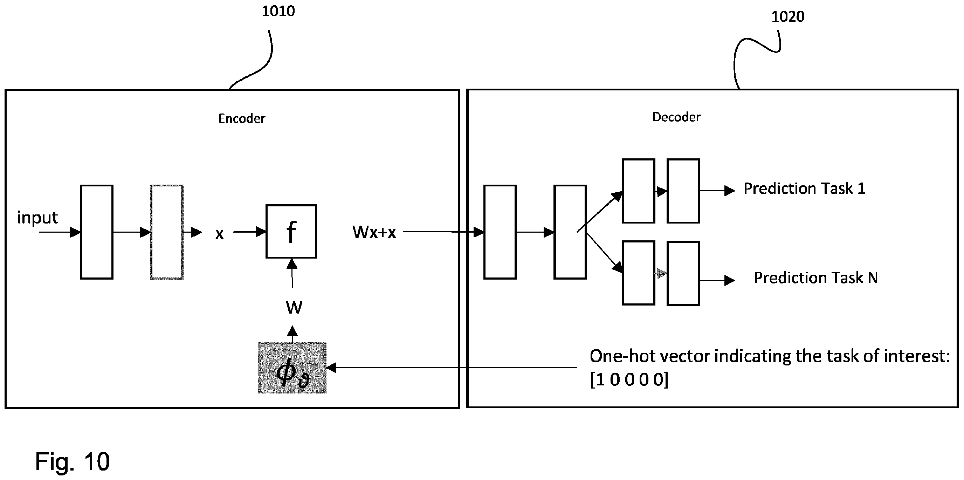

A simple example of the propose solution for a two task neural network is illustrated in Figure 10. The proposed implementation is in accordance with the example of the system of Figure 8, where the target is to save bitrate. The proposed approach is implemented for compressing the features to be transferred between an encoder architecture and a decoder. The decoder 1020 is multi-task, but it can be a single task decoder as well. This example addresses the video coding for machine and compression for visual task. The control function is $f = W \odot x$ where $W$ is a binary vector with the same dimension as $x$, and $\odot$ is element-wise multiplication. $W$

is determined based on the hint signal *s*. It is to be noticed that this control function implements feature selection for the specific task.

Nonetheless, without the loss of generality, the determined features can be used to also prune the weight in the encoder side that do not contribute to the selected features.

The tasks used in this example are image classification and image compression. The hint signal is a one-hot vector indicating:

- Features for both tasks - e.g., one-hot vector [0, 0, 1]
- Features only for task1 - e.g., one-hot vector [0, 1, 0]
- Features only for task2 - e.g., one-hot vector [1, 0, 0]

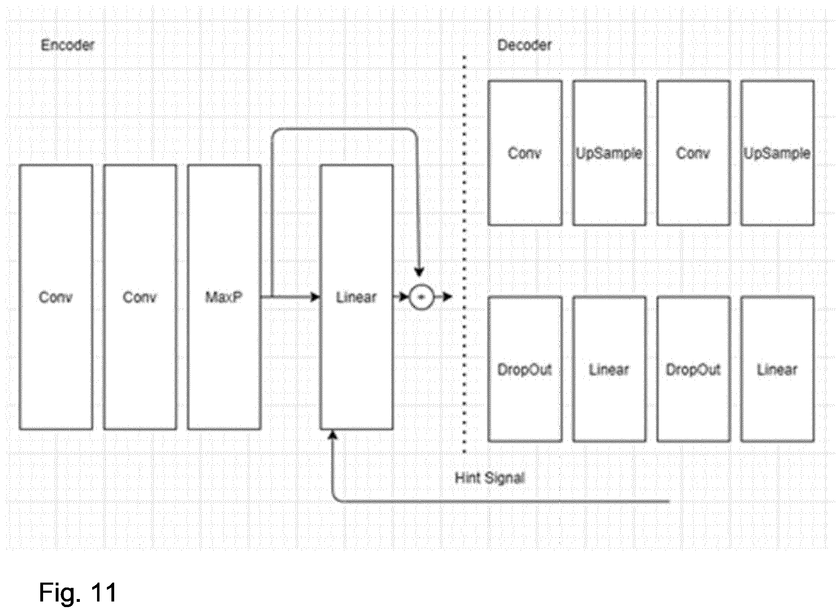

An example of the network architecture is illustrated in Figure 11.

**Training and usage procedure:**

The method for training and using, according to an embodiment, comprises the following:

1) at first training the network using both task losses for both tasks, and using the hint signal for both tasks (14 epochs);

2) freezing the backbone and saving it. The frozen backbone is referred to as "original backbone". The saved model can be deployed to some device on the edge;

3) picking a specific task of interest, retraining a local model given the task specific loss and signalling the value hinting the task (1 epoch);

4) determining the weights in the last layer of the encoder, namely linear, that are changed with respect to the original backbone;

5) making a mask that keeps the features corresponding to those changed features at the output of the encoder and prune the other features;

6) signalling the mask to the encoder device whenever needed or deploying it to be activated by the given signal;

7) repeating steps 3 - 6 for all the tasks;

8) (optional step) merging the task branches with the fine-tuned models from step 3 into one model to be available on the client.

It is to be noticed that some tasks may be more suitable for feature selection, e.g. pruning for classification seems more suitable for PSNR preservation than directly pursing for image compression as the drop on all tasks is less.

The following table shows the result on the specific compression tasks. Non-zero ratio for features is reported as a measure of compression and PSNR and Accuracy for performance. The performance is reported using the original backbone while the task is fine-tuned for the specific task of interest.

| Compression Task | nonzero | PSNR | ACC |
|---|---|---|---|
| Original | 0 | 43db | 98% |
| Image Compression | 0,27 | 37,98 | 28% |
| Classification | 0,31 | 40,36 | 95% |

For neural image/video compression, features may be compressed by training the image/video decoder in conjunction with another auxiliary task, e.g., image classification or some self-supervised task, e.g. clustering. Then, by compressing for the auxiliary task, a compressed bitstream is obtained without significant loss of PSNR or visual quality drop.

**Embodiment on Neural Network Compression**

The proposed solution can apply to the weight of neural networks itself than the features. It thus allows a targeted compression of a neural network for a specific task. This allows compressing the task network further for having a compact neural backbone feature extractors for VCM usage, and other applications that require a compact neural network. The same procedure can apply to weight update compression, determining which weight updates to keep and which weight updates to drop.

**Embodiment on further compression of the features**

The obtained features can be further quantized and entropy coded in order to be delivered and reconstructed at the decoder side. Example of the quantization can include a uniform quantization given a step size. Example of entropy coding can be CABAC. The encoding may utilize residual coding over time. A context model may further exist in order to compress the features furthermore.

**Embodiment on dynamic subnetwork selection and reconfiguration**

The proposed approach can be used to selectively route the feature extraction trunk and/or the task branches. To achieve this, a significantly large neural network can be trained for multiple tasks. The various hint signals are used to determine the active neurons for various subset or task sets. During deployment, to save memory and space, only a subset of neurons can be active. Subsequently, the encoder and/or decoder can be dynamically reconfigured to be adapted to a subset of tasks.

**Syntax and semantics**

A hint signal may comprise one or more of the following syntax elements or alike.

**hint_signal:** is a supervisory signal that could be provided to the encoder or decoder or both that allows them to adapt their working mechanism with respect to a specific working condition.

**task_id:** is communicated to determine which task a machine may be using.

**quantization_id:** is communicated which quantization may applied on the obtained data.

**quantization_step:** is used to communicate what is the step size of the uniform quantization algorithm or similar algorithms that may need a step size.

Embodiments may be realized with, but are not limited to, any of the following means to convey a hint signal:

- The hint_signal may be communicated through a supplemental enhancement information (SEI) message from encoder to decoder.
- The hint_signal may be provided via a configuration interface by a user.
- The hint signal or any syntax elements from the hint signal may be included in session description or a manifest. For example, an MIME media parameter may comprise a hint signal or one or more syntax elements of a hint signal. The MIME media parameter may be included in a session description, such as SDP, or a manifest, such as DASH MPD.
- The hint signal may be included in a back-channel message.
- The hint signal, possibly included in a back-channel message, may be carried with a communication protocol, such as the Real-time Transport Control Protocol (RTCP).
- The hint signal may be communicated as a query parameter or alike that is used as a part to initiate the communication between the end-points. For example, a decoder end-point may send an Hypertext Transfer Protocol (HTTP) GET request with a uniform resource locator (URL) wherein the indicated resource is, for example, identifying a video stream from an encoder end-point and a query string comprises the hint signal.

End-points may have an SDP offer/answer negotiation concerning hint signal(s). In an embodiment, a decoder end-point receives an offer of multiple hint signal(s) from an encoder end-point and responds by indicating the hint signal that suits the task network(s) in the decoder end-point. In an embodiment, an encoder end-point receives an offer of one or more hint signal(s) from a decoder end-point and responds by indicating the hint signal according to which it can deliver the media processed by the neural network.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

A URL may be defined to have the following syntax: scheme://[user:password@]domain:port/path?query_string#fragment_id. The scheme may, but is not required to, indicate the name of a protocol (e.g. http). The domain indicates the Internet Protocol address or the domain name, which can be resolved by the DNS (Domain Name System) protocol. The port number indicates the used Internet Protocol port. The path indicates the resource, such as a file, pointed to by the URL. The query string contains data to be passed to the entity that resolves the URL. It may contain name-value pairs separated by ampersands, for example ?first_para=123&second_para=ABC. The fragment identifier specifies a part of the resource. The fragment identification scheme may depend on the MIME type of the resource.

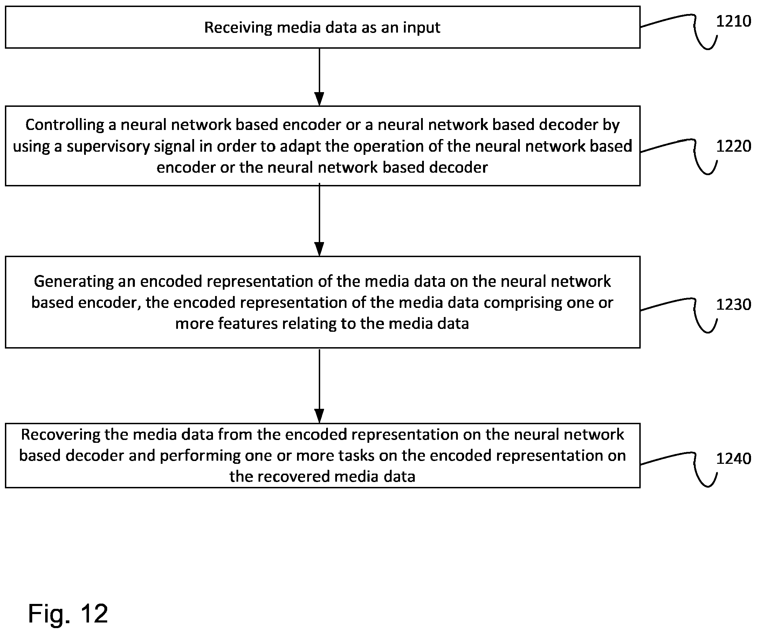

The method according to an embodiment is shown in Figure 12. The method generally comprises receiving 1210 media data as an input; controlling 1220 the neural network based encoder or the neural network based decoder by using a supervisory signal in order to adapt the operation of the neural network based encoder or decoder; generating 1230 an encoded representation of the media data on a neural network based encoder, the encoded representation of the media data comprising one or more features relating to the media data; recovering 1240 the media data from the encoded representation on a neural network based decoder and performing one or more tasks on the recovered media data; and. Each of the steps can be implemented by a respective module of a computer system.

An apparatus according to an embodiment comprises means for receiving media data as an input; means for controlling a neural network based encoder or a neural network based decoder by using a supervisory signal in order to adapt the operation of the neural network based encoder or neural network based decoder; means for generating an encoded representation of the media data on the neural network based encoder, the encoded representation of the media data comprising one or more features relating to the media data; and means for recovering the media data from the encoded representation on the neural network based decoder and performing one or more tasks on the recovered media data. The means comprises at least one processor, and a memory including a computer program code, wherein the processor may further comprise processor circuitry. The memory and the computer program code are configured to, with the at least one processor, cause the apparatus to perform the method of Figure 12 according to various embodiments.

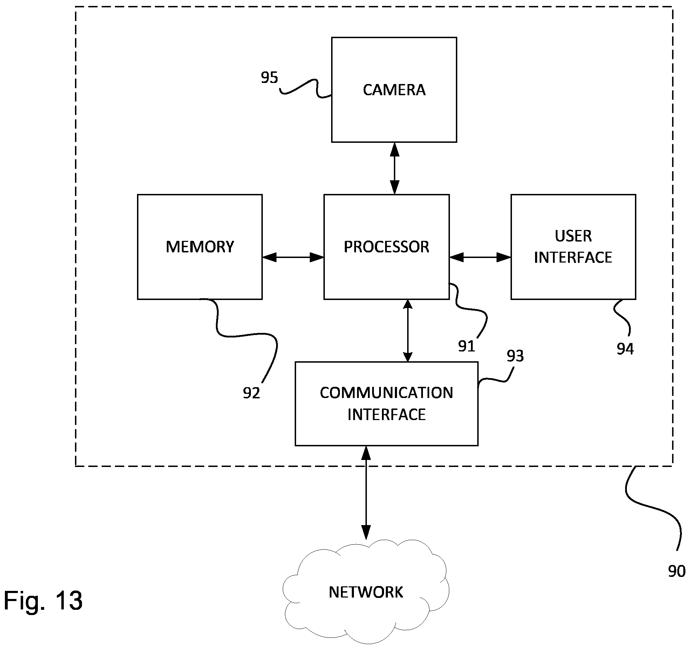

Figure 13 illustrates an example of an apparatus. The apparatus is a user equipment for the purposes of the present embodiments. The apparatus 90 comprises a main processing unit 91, a memory 92, a user interface 94, a communication interface 93. The apparatus according to an embodiment, shown in Figure 10, may also comprise a camera module 95. Alternatively, the apparatus may be configured to receive image and/or video data from an external camera device over a communication network. The memory 92 stores data including computer program code in the apparatus 90. The computer program code is configured to implement the method according various embodiments by means of various computer modules. The camera module 95 or the communication interface 93 receives data, in the form of images or video stream, to be processed by the processor 91. The communication interface 93 forwards processed data, i.e. the image file, for example to a display of another device, such a virtual reality headset. When the apparatus 90 is a video source comprising the camera module 95, user inputs may be received from the user interface.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus comprising:

   - means for receiving media data as an input;
   - means for controlling a neural network based encoder or a neural network based decoder by using a supervisory signal in order to adapt the operation of the neural network based encoder or the neural network based decoder;
   - means for generating an encoded representation of the media data on the neural network based encoder, the encoded representation of the media data comprising one or more features relating to the media data; and
   - means for recovering the media data from the encoded representation on the neural network based decoder and performing one or more tasks on the recovered media data.

2. The apparatus according to claim 1, wherein the means for controlling is configured to signal the supervisory signal from the neural network based decoder to one or more layers of the neural network based encoder.

3. The apparatus according to claim 1 or 2, wherein the means for controlling is configured to provide the supervisory signal to one or more layers of the neural network based decoder.

4. The apparatus according to claim 1, wherein the means for controlling is configured to signal the supervisory signal from the neural network based encoder to the neural network based decoder.

5. The apparatus according to any of the claims 1 to 4, wherein the supervisory signal is a vector, a matrix or a tensor.

6. The apparatus according to any of the claims 1 to 5, further comprising means for indicating the supervisory signal in one of the following: a supplemental enhancement information message; a configuration interface; a session description; a back-channel message; and a query parameter.

7. The apparatus according to any of the claims 1 to 6, wherein the supervisory signal comprises one or more of the following syntax elements: identification of a task a machine uses; identification of the quantization being applied; and step size of the quantization algorithm.

8. The apparatus according to any of the claims 1 to 7, further comprising means for training the neural network based encoder or neural network based decoder by means of a control function establishing a connection between the supervisory signal and an original neural network.

9. The apparatus according to claim 8, wherein the control function is binarized or quantized.

10. A method, comprising:

   - receiving media data as an input;
   - controlling a neural network based encoder or a neural network based decoder by using a supervisory signal in order to adapt the operation of the neural network based encoder or the neural network based decoder;
   - generating an encoded representation of the media data on the neural network based encoder, the encoded representation of the media data comprising one or more features relating to the media data; and
   - recovering the media data from the encoded representation on the neural network based decoder and performing one or more tasks on the recovered media data.

11. The method according to claim 10, further comprising signalling the supervisory signal from the neural network based decoder to one or more layers of the neural network based encoder.

12. The method according to claim 10 or 11, further comprising providing the supervisory signal to one or more layers of the neural network based decoder.

13. The method according to claim 10, further comprising signalling the supervisory signal from the neural network based encoder to the neural network based decoder.

14. The method according to any of the claims 10 to 13, wherein the supervisory signal is a vector, a matrix or a tensor.

15. The method according to any of the claims 1 to 5, further comprising indicating the supervisory signal in one of the following: a supplemental enhancement information message; a configuration interface; a session description; a back-channel message; and a query parameter.

Fig. 1

Fig. 2

Fig. 3

Fig. 4

Fig. 5

Fig. 6

Fig. 7

Fig. 8

Fig. 9

Fig. 10

Fig. 11

Receiving media data as an input — 1210

Controlling a neural network based encoder or a neural network based decoder by using a supervisory signal in order to adapt the operation of the neural network based encoder or the neural network based decoder — 1220

Generating an encoded representation of the media data on the neural network based encoder, the encoded representation of the media data comprising one or more features relating to the media data — 1230

Recovering the media data from the encoded representation on the neural network based decoder and performing one or more tasks on the encoded representation on the recovered media data — 1240

Fig. 12

Fig. 13

Europäisches
Patentamt

European
Patent Office

Office européen
des brevets

# EUROPEAN SEARCH REPORT

**Application Number**

EP 22 18 6667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEVIS-KOKITSI MANINIS ET AL: "Attentive Single-Tasking of Multiple Tasks", ARXIV.ORG, CORNELL UNIVERSITY LIBRARY, 201 OLIN LIBRARY CORNELL UNIVERSITY ITHACA, NY 14853, 18 April 2019 (2019-04-18), XP081171259, * abstract * * section 3 * * figures 1-3 * | 1-15 | INV. H04N19/46 G06N3/04 G06N3/08 H04N19/70 |
| X | EPSTEIN BARUCH ET AL: "Joint Autoencoders: A Flexible Meta-learning Framework", 18 January 2019 (2019-01-18), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 494 - 509, XP047500611, ISBN: 978-3-319-10403-4 [retrieved on 2019-01-18] * abstract * * section 3 * | 1-15 | |
| X | SHEN ZHIQIANG ET AL: "Partial Is Better Than All: Revisiting Fine-tuning Strategy for Few-shot Learning", PROCEEDINGS OF THE AAAI CONFERENCE ON ARTIFICIAL INTELLIGENCE, vol. 35, no. 11, 8 February 2021 (2021-02-08), pages 9594-9602, XP055962188, ISSN: 2159-5399, DOI: 10.1609/aaai.v35i11.17155 * abstract * * sections 1, 3 and 4 * * figures 1,2 * | 1-15 | TECHNICAL FIELDS SEARCHED (IPC) H04N G06N |

-/--

The present search report has been drawn up for all claims

| Place of search | Date of completion of the search | Examiner |
|---|---|---|
| The Hague | 8 December 2022 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 18 6667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/232895 A1 (KOKIOPOULOU EFFROSYNI [CH] ET AL) 29 July 2021 (2021-07-29) * paragraphs [0002] - [0007] * * paragraphs [0045] - [0049]; figure 4 * * paragraph [0066] * * paragraph [0091] * | 1-15 | |
| X | US 2020/372408 A1 (ROSSI FRANCESCO [US] ET AL) 26 November 2020 (2020-11-26) * paragraphs [0003] - [0014] * * paragraphs [0020] - [0041] * | 1-15 | |
| A | US 2021/218997 A1 (REZAZADEGAN TAVAKOLI HAMED [FI] ET AL) 15 July 2021 (2021-07-15) * paragraphs [0128] - [0156]; figures 6,7 * | 1-15 | |

TECHNICAL FIELDS
SEARCHED     (IPC)

The present search report has been drawn up for all claims

| Place of search | Date of completion of the search | Examiner |
|---|---|---|
| The Hague | 8 December 2022 | André, Thomas |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
 
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 22 18 6667

This annex lists the patent family members relating to the patent documents cited in  the above-mentioned European search report.
The members are as contained in the European Patent Office EDP file on
The European Patent Office is in no way liable for these particulars which are merely given for the purpose of information.

08-12-2022

| Patent document cited in search report | | Publication date | Patent family member(s) | | Publication date |
|---|---|---|---|---|---|
| US 2021232895 | A1 | 29-07-2021 | NONE | | |
| US 2020372408 | A1 | 26-11-2020 | US 2020372408 | A1 | 26-11-2020 |
| | | | WO 2020236904 | A1 | 26-11-2020 |
| US 2021218997 | A1 | 15-07-2021 | EP 4088454 | A1 | 16-11-2022 |
| | | | US 2021218997 | A1 | 15-07-2021 |
| | | | WO 2021140273 | A1 | 15-07-2021 |

EPO FORM P0459

For more details about this annex : see Official Journal of the European Patent Office, No. 12/82